Europäisches Patentamt

European Patent Office

Office européen des brevets

(19)

(11) Veröffentlichungsnummer : **0 353 413 B1**

(12) # EUROPÄISCHE PATENTSCHRIFT

(45) Veröffentlichungstag der Patentschrift :
**04.03.92 Patentblatt 92/10**

(51) Int. Cl.⁵ : **F16J 3/04**

(21) Anmeldenummer : **89109440.1**

(22) Anmeldetag : **24.05.89**

(54) **Faltenbalg.**

(30) Priorität : **05.07.88 DE 3822746**

(43) Veröffentlichungstag der Anmeldung :
**07.02.90 Patentblatt 90/06**

(45) Bekanntmachung des Hinweises auf die
Patenterteilung :
**04.03.92 Patentblatt 92/10**

(84) Benannte Vertragsstaaten :
**DE ES FR GB IT**

(56) Entgegenhaltungen :
**AT-B- 309 167**
**DE-A- 3 240 988**

(56) Entgegenhaltungen :
**DE-A- 3 516 775**
**DE-U- 8 516 466**
**FR-A- 1 342 501**
**US-A- 3 252 851**

(73) Patentinhaber : **Gebr. Hennig GmbH**
**Dorfstrasse 41**
**W-8045 Ismaning (DE)**

(72) Erfinder : **Hennig, Kurt**
**Georgensteinstrasse 16**
**W-8000 München 71 (DE)**

(74) Vertreter : **Tetzner, Volkmar, Dr.-Ing. Dr. jur.**
**Van-Gogh-Strasse 3**
**W-8000 München 71 (DE)**

## Beschreibung

Die Erfindung betrifft einen Faltenbalg entsprechend dem Oberbegriff des Anspruches 1 sowie ein Verfahren zur Herstellung eines Faltenbalges (gemäß dem Gattungsbegriff des Anspruches 8).

Faltenbälge finden bei Werkzeugmaschinen zum Schutz beweglicher Teile Verwendung. Der Balgkörper wird im allgemeinen von einer mehrlagigen Decke gebildet. Die Außenschicht dieser Decke muß insbesondere gegenüber teilweise sehr aggressiven Kühlmitteln beständig sein. Der Balgkörper enthält ferner auf der Innenseite im allgemeinen eine Absteifungsschicht, die unter Berücksichtigung des Spänebefalles, dem der Faltenbalg ausgesetzt ist, genügend stark gewählt werden muß. Die Absteifungsschicht ist bei bekannten Ausführungen ferner mit Perforationen versehen, die die Faltlinien bilden.

Die Verbindung der einzelnen Schichten der mehrlagigen Decke des Balgkörpers erfolgt bei den bekannten Ausführungen bisher in der Regel durch zonenweises Vernähen oder Verkleben.

Nachteilig ist bei den bekannten Ausführungen der verhältnismäßig hohe fertigungstechnische Aufwand, der mit der Herstellung der in vielfältigen Varianten benötigten Faltenbälge verbunden ist.

Ein Faltenbalg der im Oberbegriff des Anspruches 1 vorausgesetzten Art ist aus DE-U-85 16 466 bekannt. In diesem Falle wird eine Decke durch einen Verbund aus fünf bis fünfzig, vorzugsweise zehn bis dreißig, übereinandergelegten einzelnen Folienlagen aus offensichtlich gleichen thermoplastischen Kunststoffmaterialien gebildet, wobei dieser Folienlagen-Verbund ganz bewußt in mehreren Flächenbereichen fest miteinander verschweißt werden soll, während jeweils zwischen diesen verschweißten Bereichen andere Bereiche (für Knickfalten) vorgesehen sind, an denen die Folienlagen nicht miteinander verschweißt sind. Für die Faltenbalgdecke ist somit ein Verbund aus einer Vielzahl von jeweils gleichartigen Kunststoff-Folienlagen geschaffen, die nur in bestimmten Bereichen und somit zonenweise miteinander verschweißt sind.

Der Erfindung liegt nun die Aufgabe zugrunde, einen Faltenbalg der im Oberbegriff des Anspruches 1 vorausgesetzten Art sowie ein Verfahren (gemäß dem Gattungsbegriff des Anspruches 8) zur Herstellung eines Faltenbalges zu schaffen, die sich durch eine besonders einfache Fertigung auszeichnen und die Herstellung von Faltenbälgen in unterschiedlichsten Varianten ermöglichen.

Diese Aufgabe wird erfindungsgemäß durch die kennzeichnenden Merkmale der Ansprüche 1 bzw. 8 gelöst. Zweckmäßige Ausgestaltungen der Erfindung sind Gegenstand der Unteransprüche.

In der Zeichnung ist die Erfindung beispielsweise veranschaulicht. Es zeigen

Fig.1 eine Aufsicht auf ein Teilstück des Balgkörpers (im ausgebreiteten Zustand),

Fig.2 eine Stirnansicht des gefalteten Balgkörpers,

Fig.3 und 4 Schnitte durch zwei Ausführungsbeispiele der den Balgkörper bildenden mehrlagigen Decke,

Fig.5 und 6 Schemadarstellungen zur Erläuterung eines Verfahrens zur kontinuierlichen Herstellung von Balgkörpern.

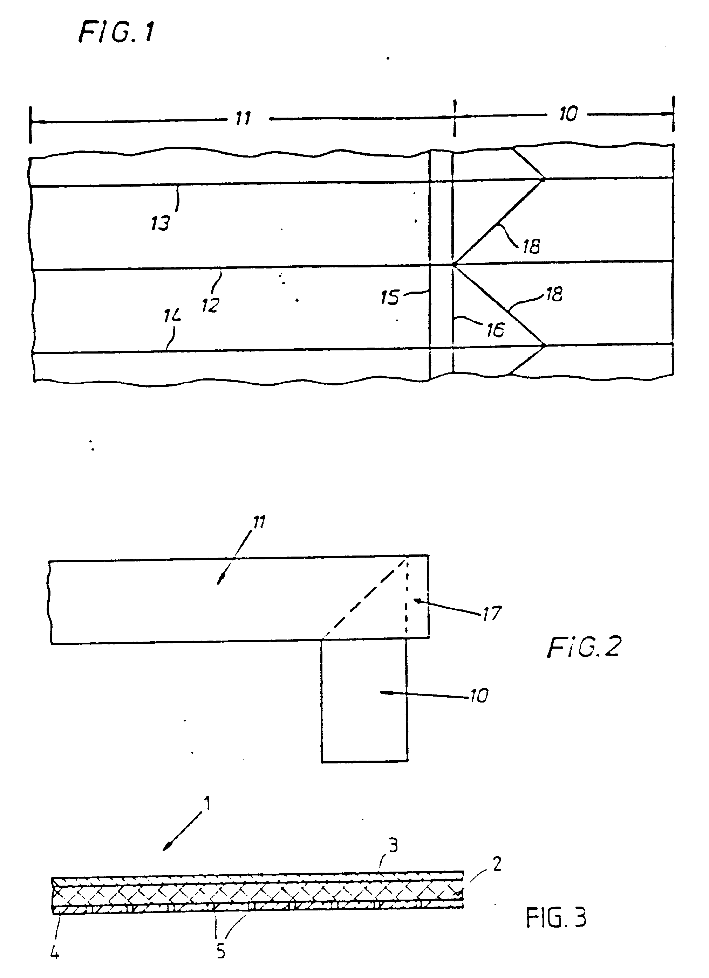

Fig.1 veranschaulicht in einem Teilausschnitt das in eine Ebene ausgebreitete Material des Balgkörpers, und zwar im Bereich eines Schenkels 10 und eines Teiles der Oberseite 11. Die Linie 12 markiert die Lage einer nach innen weisenden Falte des Faltenbalges und die Linien 13, 14 die Lage der benachbarter, nach außen weisenden Falten.

Faltlinien 15, 16 ergeben im eingeschwenkten Zustand des Schenkels 10 (vgl. Fig. 2) einen gewissen seitlichen Überstand 17 der Oberseite 11 über den Schenkel 10. Faltlinien 18 ermöglichen das Einschwenken des Schenkels 10 gegenüber der Oberseite 11.

Der Faltenbalg, dessen in axialer Richtung ausziehbarer Balgkörper quer zur Auszugsrichtung (längs der Linien 12, 13, 14) verlaufende, abwechselnd nach innen und außen weisende Falten aufweist, kann im Bereich zumindest einiger nach außen weisender Falten mit Stützelementen versehen sein (was in der Zeichnung nicht dargestellt ist).

Fig. 3 zeigt ein Ausführungsbeispiel für den Aufbau der mehrlagigen Decke, die den Balgkörper bildet. Diese Decke 1 enthält eine Trägerschicht 2, eine auf der Außenseite der Trägerschicht 2 vorgesehene Außenschicht 3 und eine auf der Innenseite der Trägerschicht 2 vorgesehene Absteifungsschicht 4.

Die Trägerschicht 2 wird durch ein Kunststoff- oder Naturfasergewebe, vorzugsweise durch ein Gewebe aus Polyester oder Polyamid gebildet.

Die Außenschicht 3 besteht aus schweißbarem Kunststoff, zweckmäßig aus Polyurethan oder Polyvinylchlorid.

Die Absteifungsschicht 4 besteht aus schweißbarem Kunststoff. Sie ist mit Perforationen 5 versehen, die Faltmarkierungen bzw. Faltlinien bilden.

Die drei Schichten 2, 3, 4 sind erfindungsgemäß ganzflächig miteinander verschweißt, was beispielsweise gleichzeitig erfolgen kann.

Die Außenschicht 3 kann hierbei bevorzugt in Form einer Folie auf die Trägerschicht 2 aufgebracht werden, oder als Pasten- oder Pulverauftrag.

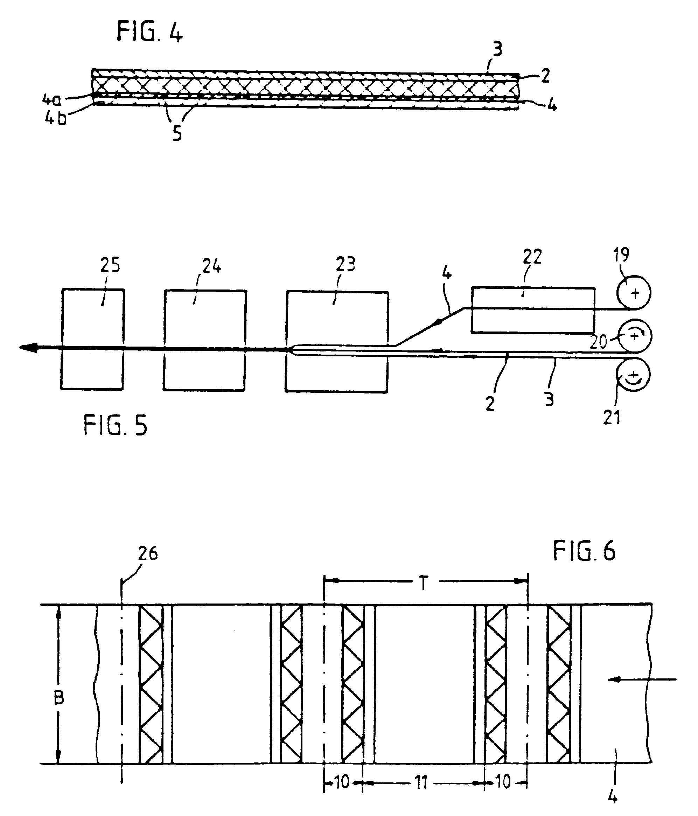

Bei dem in Fig.4 dargestellten Ausführungsbeispiel besteht die Absteifungsschicht 4 aus zwei Teilschichten 4a und 4b. Die der Trägerschicht 2 zugewandte äußere Teilschicht 4a weist die durch die Perforation 5 gebildeten Faltmarkierungen auf, während die innere Teilschicht 4b flächig geschlossen, d.h. ohne Perforationen, ausgebildet ist.

Bei der Herstellung der in Fig.4 dargestellten Decke des Balgkörpers werden die beiden Teilschichten 4a, 4b der Absteifungsschicht 4, die Trägerschicht 2 und die Außenschicht 3 ganzflächig, und zwar vorzugsweise gleichzeitig, miteinander verschweißt.

Die beiden Teilschichten 4a und 4b der Absteifungsschicht 4 bestehen aus schweißbarem Kunststoffmaterial bzw. aus entsprechenden Geweben, Vliesen oder ähnlichem. Sie besitzen jeweils eine Stärke zwischen 50 und 100 µm, vorzugsweise etwa je 100 µm. Die Gesamtstärke der Absteifungsschicht liegt zweckmäßig zwischen 150 und 300 µm, vorzugsweise bei etwa 200 µm.

Das Ausführungsbeispiel gemäß Fig .4 besitzt den besonderen Vorteil, daß einerseits die mit Perforationen 5 versehene Teilschicht 4a eine geringe Stärke und damit eine gute Knickfestigkeit besitzt, während andererseits die nicht perforierte Teilschicht 4b keine Schwächung durch Perforationen aufweist und eine gute Scharnierwirkung (im Bereich der Faltlinien) und eine ausgezeichnete Dichtigkeit der gesamten Decke gewährleistet.

Im Rahmen der Erfindung können selbstverständlich auch noch weitere Schichten Verwendung finden und es können die unterschiedlichsten Materialien der einzelnen Schichten miteinander kombiniert werden. Denkbar ist beispielsweise auch die Einbindung von Metallschichten (wie Folien, Gewebe, Metallisierungen)

Die Fig. 1 und 2 zeigen ein Ausführungsbeispiel eines Faltenbalges, dessen Balgkörper nach der Unterseite hin offen ist und somit aus einer Oberseite und zwei seitlichen Schenkeln besteht. Die Erfindung ist jedoch auch bei Faltenbälgen anwendbar, deren Balgkörper einen geschlossenen, polygonalen Querschnitt aufweist.

Die Fig.5 und 6 veranschaulichen ein Ausführungsbeispiel des erfindungsgemäßen Verfahrens zur kontinuierlichen Herstellung von Balgkörpern der beschriebenen Art.

Zur Herstellung der Balgkörper findet Rollenmaterial Verwendung, das beispielsweise in Form von drei Rollen 19, 20, 21 (für die Absteifungsschicht 4, die Trägerschicht 2 und die Außenschicht 3) vorgegeben wird. Die Breite B dieses Rollenmateriales entspricht einer Standard-Teillänge des Balges.

Die Absteifungsschicht 4 durchläuft zunächst eine erste Station 22, in der die erforderlichen Ausstanzungen vorgenommen werden. Fig .6 veranschaulicht die Absteifungsschicht 4 nach dem Verlassen der Station 22. Das Teilstück T entspricht dabei dem für eine Standard-Teillänge des Balgkörpers erforderlichen Material der Absteifungsschicht 4. Dabei ist - in Übereinstimmung mit der Darstellung gemäß Fig.1 und 2 - 10 der Bereich der Schenkel und 11 der Bereich der Oberseite des Balgkörpers.

Anschließend werden die Trägerschicht, die Außenschicht 3 und die in der Station 22 gestanzte Absteifungsschicht 4 in eine Station 23 eingeführt, die beispielsweise in Form einer Heizpresse ausgebildet ist und in der die ganzflächige Verschweißung der drei Schichten erfolgt (z.B. mittels Platten oder Walzen).

In einer folgenden Station 24 wird der gebildete Verbundkörper gekühlt, ehe er anschließend in einer Station 25 längs der in Fig.6 angedeuteten Linien 26 in Teilstücke geschnitten wird, die jeweils der Breite des Balgkörpers (im flächig auseinandergebreiteten Zustand) entsprechen.

Werden die Faltmarkierungen in der Absteifungsschicht 4 durch Perforationen gebildet, so werden diese Perforationen zugleich mit dem Stanzvorgang in der ersten Station 22 hergestellt.

Sollen dagegen die Faltmarkierungen des Balgkörpers durch Einprägungen oder sonstige linienartige Schwächungen des Materiales gebildet werden, so kann die Herstellung dieser Faltmarkierungen gleichzeitig mit dem flächigen Verschweißen in einer Station 23 erfolgen.

Im Rahmen der Erfindung sind selbstverständlich auch noch andere sinnvolle Abwandlungen der bisher beschriebenen und anhand der Zeichnung erläuterten Merkmale und Verfahrensweisen möglich. Während anhand der Fig.5 und 6 ein kontinuierliches Verfahren zur Herstellung von Balgkörpern aus Rollenmaterial erläutert ist, besteht auch die Möglichkeit, aus dem Rollenmaterial zumindest für eine der Schichten der Breite des Balgkörpers entsprechende Zuschnitte vorzufertigen und dem Verfahrensablauf zuzuführen. Das Stanzen der Absteifungsschicht in der ersten Station, das anschließende ganzflächige Verschweißen von Trägerschicht, Außenschicht und Absteifungsschicht in einer Station und das nachfolgende Abkühlen des ganzflächig verschweißten Verbundkörpers für die Decke in einer Station kann dann ebenfalls im wesentlichen kontinuierlich durchgeführt werden.

Das Aufbringen der Außen- und Innenschichten auf die Trägerschicht kann durch eine Trockenlaminierung (z.B. Folienkaschierung) oder eine Naßlaminierung (Pulver- bzw. Pastenauftrag) jeweils unter Einwirkung von Temperatur, Druck und Kühlung erfolgen. Die die Decke bildenden Schichten sind auf diese Weise - wie weiter oben erläutert - ganzflächig miteinander verschweißt. Dabei ist es besonders vorteilhaft, die Anwendung von Temperatur und Druck so vorzusehen, daß die Außenschicht mit der Trägerschicht ganz flächig verschweißt ist und dabei durch die Trägerschicht gewissermaßen hindurchgedrückt wird, damit eine wirklich umfassende ganzflächige Verschweißung nach der Abkühlung durchgeführt ist. Ähnlich kann man auch bei der Verschweißung zwischen Trägerschicht und Absteifungsschicht vorgehen. Für diese Art der ganzflächigen Verschweißung der die Decke bildenden Schichten miteinander ist es dann von besonderem Vorteil, wenn die Trägerschicht - wie weiter oben erläutert - aus entsprechenden Geweben, Gewirken, Vlies geeigneten Kunststoffmaterialien besteht, wodurch beim ganzflächigen Verschweißen die Beschichtungsmaterialien ausreichend tief in die Trägerschicht eindringen bzw. durch diese hindurchdringen können.

**Patentansprüche**

1. Faltenbalg, dessen Balgkörper von einer mehrlagigen Decke gebildet wird, die wenigstens zwei Schichten aus schweißbarem Kunststoff enthält, gekennzeichnet durch folgende Merkmale:
a) die Decke (1) besteht wenigstens aus
– einer durch ein Gewebe, Gewirke und/oder Vlies gebildeten Trägerschicht (2),
– einer auf der Außenseite der Trägerschicht vorgesehenen Außenschicht (3) aus schweißbarem Kunststoff
– und einer auf der Innenseite der Trägerschicht (2) vorgesehenen, Faltmarkierungen aufweisenden Absteifungsschicht (4) aus schweißbarem Kunststoff;
b) die die Decke bildenden Schichten (2, 3, 4) sind ganzflächig miteinander verschweißt.

2. Faltenbalg nach Anspruch 1, gekennzeichnet durch folgende Merkmale:
a) die Absteifungsschicht (4) besteht aus wenigstens zwei Teilschichten (4a, 4b), von denen die der Trägerschicht (2) zugewandte äußere Teilschicht (4a) Faltmarkierungen aufweist, während die innere Teilschicht (4b) flächig geschlossen ausgebildet ist;
b) die beiden Teilschichten (4a, 4b) der Absteifungsschicht (4), die Trägerschicht (2) und die Außenschicht (3) sind flächig miteinander verschweißt.

3. Faltenbalg nach Anspruch 1, dadurch gekennzeichnet, daß die Trägerschicht (2) durch ein aus Kunststoff und/oder Naturfasern bestehendes Gewebe, Gewirke oder Vlies, vorzugsweise aus Polyester oder Polyamid, gebildet wird.

4. Faltenbalg nach Anspruch 1, dadurch gekennzeichnet, daß die Außenschicht (3) aus Polyurethan, Polyvinylchlorid, einem sonstigen schweißbaren Kunststoff, einer Kunststoffmischung oder einem mehrlagigen Verbund besteht.

5. Faltenbalg nach Anspruch 2, dadurch gekennzeichnet, daß die beiden Teilschichten (4a, 4b) der Absteifungsschicht (4) aus Hart-Polyvinylchlorid, Polyamid, einem sonstigen schweißbaren Kunststoff, einer Mischung oder einem mehrlagigen Verbund bestehen.

6. Faltenbalg nach Anspruch 2, dadurch gekennzeichnet, daß die beiden Teilschichten (4a, 4b) der Absteifungsschicht (4) jeweils eine Stärke zwischen 50 und 150 µm, vorzugsweise etwa 100 µm, aufweisen, wobei die Gesamtstärke der Absteifungsschicht zwischen 150 und 300 µm, vorzugsweise bei etwa 200 µm liegt.

7. Faltenbalg nach Anpruch 2, dadurch gekennzeichnet, daß die Teilschichten (4a, 4b) der Absteifungsschicht (4) durch eine zusätzliche Materialschicht, vorzugsweise eine aufgeschweißte Folie oder ein Gewebe, verstärkt sind.

8. Verfahren zur Herstellung eines Faltenbalges, dessen Balgkörper von einer mehrlagigen Decke gebildet wird, dadurch gekennzeichnet, daß wenigstens eine Trägerschicht (2), eine auf der Außenseite der Trägerschicht vorgesehene Außenschicht (3) aus schweißbarem Kunststoff sowie eine auf der Innenseite der Trägerschicht vorgesehene Falt markierungen aufweisende Absteifungsschicht (4) aus schweißbarem Kunststoff flächig miteinander verschweißt werden.

9. Verfahren nach Anspruch 8, dadurch gekennzeichnet, daß die Außenschicht (3) in Form einer Folie auf die Trägerschicht (2) aufgebracht wird.

10. Verfahren nach Anspruch 8, dadurch gekennzeichnet, daß die Außenschicht (3) in Form eines Pasten- oder Pulverauftrags auf die Trägerschicht (2) aufgebracht wird.

11. Verfahren nach Anspruch 8, dadurch gekennzeichnet, daß zur Herstellung von Balgkörpern Rollenmaterial (19, 20, 21) verwendet wird, dessen Breite einer Standardteillänge des Balges entspricht, und daß in einer Stanzstation (22) zunächst die Absteifungsschicht (4) gestanzt wird, anschließend in einer Schweißstation (23) die ganzflächige Verschweißung von Trägerschicht, Außenschicht und Absteifungsschicht erfolgt und hiernach in einer Kühlstation (24) gekühlt wird.

12. Verfahren nach Anspruch 11, dadurch gekennzeichnet, daß die Herstellung der Balgkörper in einem kontinuierlichen Verfahrensablauf vom Rollenmaterial für die einzelnen Schichten erfolgt und nach dem Kühlen in einer Schneid- Station (25) das miteinander verschweißte Rollenmaterial in der Breite des Balgkörpers entsprechende Teilstücke (T) geschnitten wird.

13. Verfahren nach Anspruch 11, dadurch gekennzeichnet, daß aus dem Rollenmaterial zumindest einer Schicht der Breite des Balgkörpers entsprechende Zuschnitte vorgefertigt und zugeführt werden.

14. Verfahren nach Anspruch 11, dadurch gekennzeichnet, daß die Absteifungsschicht in einer Perforationsstaton mit durch Perforationen gebildeten Faltmarkierungen versehen wird.

15. Verfahren nach Anspruch 11, dadurch gekennzeichnet, daß die Absteifungsschicht in einer Prägestation mit durch Einprägungen gebildeten Faltmarkierungen versehen wird.

**Claims**

1. Bellows in which the bellows body is formed by a multi-layer cover, containing at least two layers of weldable plastic, characterised by the following features:
   a) the cover (1) consists of at least
      – a carrier layer (2) formed by a woven or worked fabric and/or fleece,
      – an outer layer (3) made from weldable plastic provided on the outer face of the carrier layer
      – and a reinforcing layer (4) made from weldable plastic provided on the inner face of the carrier layer (2) and having pleat markings,
   b) the layers (2, 3, 4) forming the cover are welded together over the entire surface.

2. Bellows as claimed in claim 1, characterised by the following features:
   a) the reinforcing layer (4) consists of at least two part-layers (4a, 4b) of which the outer part-layer (4a) facing the carrier layer (2) has pleat markings, whilst the inner part-layer (4b) is constructed with a closed surface;
   b) the two part-layer (4a, 4b) of the reinforcing layer (4), the carrier layer (2) and the outer layer (3) are welded together over the entire surface.

3. Bellows as claimed in claim 1, characterised in that the carrier layer (2) is formed by a woven or knitted fabric or fleece made from plastic and/or natural fibres, preferably polyester or polyamide.

4. Bellows as claimed in claim 1, characterised in that the outer layer (3) is made from polyurethane, polyvinyl chloride, another weldable plastic, a plastic mixture or a multi-layer composite material.

5. Bellows as claimed in claim 2, characterised in that the two part-layers (4a, 4b) of the reinforcing layer are made from hard polyvinyl chloride, polyamide, another weldable plastic, a mixture or a multi-layer composite material.

6. Bellows as claimed in claim 2, characterised in that the two part-layers (4a, 4b) of the reinforcing layer each have a thickness between 50 and 100 µm, preferably approximately 100 µm, the total thickness of the reinforcing layer being between 150 and 300 µm, preferably approximately 200 µm.

7. Bellows as claimed in claim 2, characterised in that the part-layers (4a, 4b) of the reinforcing layer (4) are reinforced by an additional layer of material, preferably a film which is welded on or a woven fabric.

8. Method of producing a bellows, in which the bellows body is formed by a multi-layer cover, characterised in that at least one carrier layer (2), an outer layer (3) made from weldable plastic and provided on the outer face of the carrier layer and a reinforcing layer (4) having pleat markings and made from welded plastic and provided on the inner face of the carrier layer are welded to one another over the entire surface.

9. Method as claimed in claim 8, characterised in that the outer layer (3) is applied to the carrier layer (2) in the form of a film.

10. Method as claimed in claim 8, characterised in that the outer layer (3) is applied to the carrier layer (2) in the form of a paste or a powder.

11. Method as claimed in claim 8, characterised in that for the production of bellows bodies materials on rolls (19, 20, 21) is used in which the width corresponds to a standard part length of the bellows, and first of all the reinforcing layer is stamped in a stamping station (22), then the carrier layer, outer layer and reinforcing layer (4) are welded together over the entire surface in a welding station (23) and afterwards cooled in a cooling station (24).

12. Method as claimed in claim 11, characterised in that the bellows body is produced in a continuous process from rolled material for the individual layers and, after cooling, the rolled material which has been welded together is cut in a cutting station (25) into pieces (T) which correspond to the width of the bellows body.

13. Method as claimed in claim 11, characterised in that blanks corresponding to the width of the bellows body are prepared from the rolled material for at least one layer and introduced into the process.

14. Method as claimed in claim 11, characterised in that the reinforcing layer is provided with pleat markings formed by perforations in a perforation station.

15. Method as claimed in claim 11, characterised in that the reinforcing layer is provided with pleat markings formed by indentations in an indenting station.

EP 0 353 413 B1

## Revendications

1. Soufflet, dont le corps est formé d'une housse en plusieurs couches comprenant au moins deux couches de matière plastique soudable, caractérisé par les particularités suivantes :

a) la housse (1) se compose d'au moins
   – une couche de substrat (2) formée d'un tissu, d'un tricot et/ou d'une toison,
   – d'une couche extérieure (3) de matière plastique soudable prévue sur le côté extérieur de la couche de substrat,
   – et d'une couche de rigidification (4) en matière plastique soudable prévue sur le côté intérieur de la couche de substrat (2) et comportant les marques de pliage ;

b) les couches (2, 3, 4) formant la housse sont soudées les unes aux autres sur la totalité de leur surface.

2. Soufflet selon la revendication 1, caractérisé par les particularités suivantes :

a) la couche de rigidification (4) se compose d'au moins deux couches élémentaires (4a, 4b) dont la couche élémentaire extérieure (4a) tournée vers la couche de substrat (2) comporte les marques de pliage, tandis que la couche élémentaire intérieure (4b) présente une surface fermée ;

b) les deux couches élémentaires (4a, 4b) de la couche de rigidification (4), la couche de substrat (2) et la couche extérieure (3) sont soudées les unes aux autres par leurs surfaces.

3. Soufflet selon la revendication 1, caractérisé en ce que la couche de substrat (2) est formée d'un tissu, d'un tricot ou d'une toison en matière plastique et/ou en fibres naturelles, de préférence en polyester ou en polyamide.

4. Soufflet selon la revendication 1, caractérisé en ce que la couche extérieure (3) est en polyuréthane, en chlorure de polyvinyle, en une autre matière plastique soudable, en un mélange de matières plastiques ou en un élément composite à plusieurs couches.

5. Soufflet selon la revendication 2, caractérisé en ce que les deux couches élémentaires (4a, 4b) de la couche de rigidification (4) sont en chlorure de polyvinyle dur, en polyamide, en une autre matière plastique soudable, en un mélange ou en un élément composite à plusieurs couches.

6. Soufflet selon la revendication 2, caractérisé en ce que les deux couches élémentaires (4a, 4b) de la couche de rigidification (4) ont chacune une épaisseur comprise entre 50 et 150 μm, de préférence d'environ 100 μm, l'épaisseur totale de la couche de rigidification étant comprise entre 150 et 300 μm et étant de préférence d'environ 200 μm.

7. Soufflet selon la revendication 2, caractérisé en ce que les couches élémentaires (4a, 4b) de la couche de rigidification (4) sont renforcées par une couche supplémentarie de matière, de préférence d'une feuille ou d'un tissu rapporté par soudage.

8. Procédé de production d'un soufflet dont le corps est formé d'une housse en plusieurs couches, caractérisé en ce qu'au moins une couche de substrat (2), une couche extérieure (3) de matière plastique soudable prévue sur le côté extérieur de la couche de substrat, ainsi qu'une couche de rigidification (4) en matière plastique soudable comportant des marques de pliage et prévue sur le côté intérieur de la couche de substrat sont soudées les unes aux autres par leurs surfaces.

9. Procédé selon la revendication 8, caractérisé en ce que la couche extérieure (3) est en forme d'une feuille placée sur la couche de substrat (2).

10. Procédé selon la revendication 8, caractérisé en ce que la couche extérieure (3) est en forme d'un dépôt de pâte ou de poudre placé sur la couche de substrat (2).

11. Procédé selon la revendication 8, caractérisé en ce que des rouleaux de matière (19, 20, 21) utilisés pour la production de corps de soufflet ont une largeur qui correspond à une longueur élémentaire standard du soufflet et en ce que la couche de rigidification (4) est tout d'abord découpée à un poste de matriçage (22), ensuite le soudage sur la totalité de leurs surfaces de la couche de substrat, de la couche extérieure et de la couche de rigidification a lieu à un poste de soudage (23), puis ces couches passent par un poste de refroidissement (24).

12. Procédé selon la revendication 11, caractérisé en ce que la production du corps du soufflet se déroule suivant un processus continu appliqué à des rouleaux de matière devant former les couches individuelles et, à la fin du refroidissement, les matières des rouleaux soudées les unes aux autres sont coupées à un poste de découpage (25) en pièces élémentaires (T) correspondant à la largeur du corps du soufflet.

13. Procédé selon la revendication 11, caractérisé en ce que des coupons correspondant à la largeur du corps du soufflet sont préfabriqués dans la matière du rouleau d'au moins une couche, puis sont avancés.

14. Procédé selon la revendication 11, caractérisé en ce que la couche de rigidification est pourvue à un poste correspondant de marques de pliage formées de perforations.

15. Procédé selon la revendication 11, caractérisé en ce que la couche de rigidification est pourvues à un poste correspondant de marques de pliage formées d'empreintes.

6

FIG.1

FIG.2

FIG.3

FIG. 4

FIG. 5

FIG. 6